# EUROPEAN PATENT SPECIFICATION

(11) **EP 2 402 567 B1**
(45) Date of publication and mention of the grant of the patent: **30.09.2015**
(21) Application number: 11171995.1
(22) Date of filing: 29.06.2011
(51) Int. Cl.: F01K 25/10, F22B 35/00, F01K 23/10, F02C 6/18, F22B 1/18, F22B 37/42

(54) **Inert gas purging system for an orc heat recovery boiler**
Inertgasreinigungssystem für einen ORC-Abhitzekessel
Système de purge de gaz inertes pour chaudière de récupération de chaleur ORC

(30) Priority: 30.06.2010 US 827105
(43) Date of publication of application: 04.01.2012
(73) Proprietor: General Electric Company, Schenectady, NY 12345 (US)
(72) Inventor: Freund, Sebastian W., Niskayuna, NY New York 132309 (US); Kopecek, Herbert, Niskayuna, NY New York 12309 (US); Lehar, Matthew Alexander, Niskayuna, NY New York 12309 (US); Huck, Pierre Sebastien, Niskayuna, NY New York 12309 (US); Scharl, Albert Andreas, Niskayuna, NY New York 12309 (US); Martini, Mario, Niskayuna, NY New York 12309 (US); Castellani, Paolo, Niskayuna, NY New York 12309 (US); Ast, Gabor, Niskayuna, NY New York 12309 (US); Frey, Thomas Johannes, Niskayuna, NY New York 12309 (US); Seghi, Giacomo, Niskayuna, NY New York 12309 (US); Amato, Vincenzo, Niskayuna, NY New York 12309 (US); Cappelli, Mauro, Niskayuna, NY New York 12309 (US); Bartolozzi, Stefano, Niskayuna, NY New York 12309 (US)
(74) Representative: Illingworth-Law, William Illingworth

(56) References cited:
- EP-A2- 2 014 897
- WO-A2-2009/141028
- US-A- 4 524 822
- US-A- 4 621 681
- US-A1- 2004 255 585

## Description

### BACKGROUND OF THE INVENTION

The subject matter disclosed herein relates to waste heat recovery systems employing boilers, and more specifically, to inert gas purging systems for heat recovery boilers.

Waste heat recovery systems may be employed to recover low-grade heat, such as heat with a temperature below approximately 500°C, from industrial and commercial processes and operations. For example, waste heat recovery systems may be employed to recover low-grade heat from hot exhaust gases produced by gas turbines. Waste heat recovery systems that implement an Organic Rankine Cycle (ORC) by circulating an organic working fluid may be particularly efficient at recovering low-grade heat due to the relatively low phase change enthalpies of organic working fluids. A waste heat recovery system further comprising a purging system is disclosed by US2004/255585A1.

### BRIEF DESCRIPTION OF THE INVENTION

In a first embodiment, a system includes a valve system switchable between a waste heat recovery position configured to direct incoming exhaust gas through an interior volume of an exhaust section of an engine and a bypass position configured to direct the incoming exhaust gas through a bypass duct to bypass a heat recovery boiler disposed within the interior volume. The system also includes an inert gas purging system configured to inject an inert gas into the interior volume to displace residual exhaust gas from the interior volume.

In a second embodiment, a system includes a heat recovery boiler configured to absorb heat directly from exhaust gas within an exhaust section of an engine to heat an organic working fluid within the heat recovery boiler, an expander configured to expand the heated organic working fluid, a condenser configured to condense the expanded organic working fluid, a pump configured to direct the condensed organic working fluid to the heat recovery boiler, a sensor configured to detect a leak of the organic working fluid from the heat recovery boiler, and an inert gas purging system configured to inject inert gas into the exhaust section in response to detection of the leak.

In a third embodiment, a method includes detecting a leak of an organic working fluid from a heat recovery boiler into an interior volume of an exhaust section of an engine, setting a valve to a bypass position to direct incoming exhaust gas to bypass the interior volume of the exhaust section in response to detecting the leak, and injecting an inert gas into the interior volume to displace residual exhaust gas from the interior volume in response to detecting the leak.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic flow diagram of an embodiment of a power generation system that may employ an inert gas purging system within a waste heat recovery system;
FIG. 2 is a schematic flow diagram of the waste heat recovery system of FIG. 1 depicting an embodiment of an inert gas purging system;
FIG. 3 is a schematic flow diagram of the waste heat recovery system of FIG. 2 operating in the bypass mode; and
FIG. 4 is a flowchart depicting an embodiment of a method for purging exhaust gas from a heat recovery boiler.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure is directed to waste heat recovery systems that employ inert gas purging systems for heat recovery boilers. The waste heat recovery systems may recover low-grade heat from a system, such as a gas turbine, by implementing an Organic Rankine Cycle (ORC) with an organic working fluid, such as a hydrocarbon fluid or refrigerant. Rather than transferring heat to the organic working fluid through an intermediate fluid, such as oil, the present systems may employ a "direct" heat recovery boiler that transfers heat directly from the gas turbine exhaust gas to the working fluid. According to certain embodiments, the heat recovery boiler, which circulates the working fluid, may be disposed directly in the path of the exhaust gas within the exhaust section of the gas turbine. Placing the heat recovery boiler directly in the path of the exhaust gas, rather than using a secondary loop to transfer heat between the exhaust gas and the waste heat recovery system, may increase the overall efficiency of the waste heat recovery system, as well as reducing capital and/or operational costs.

To protect the gas turbine exhaust section and the waste heat recovery system in the event of a leak in the heat recovery boiler, the power generation system may employ a purging system for the heat recovery boiler. According to certain embodiments, the purging system may be enabled upon detection of a leak in the heat recovery boiler. The purging system may redirect the flow of exhaust gases so that the exhaust gases bypass the heat recovery boiler. Further, the purging system may inject an inert gas into the exhaust gas duct to purge residual exhaust gases from the exhaust duct. The inert gas also may cool the heat recovery boiler and dilute any leaking fluid, thereby extinguishing and/or inhibiting flames within the exhaust duct.

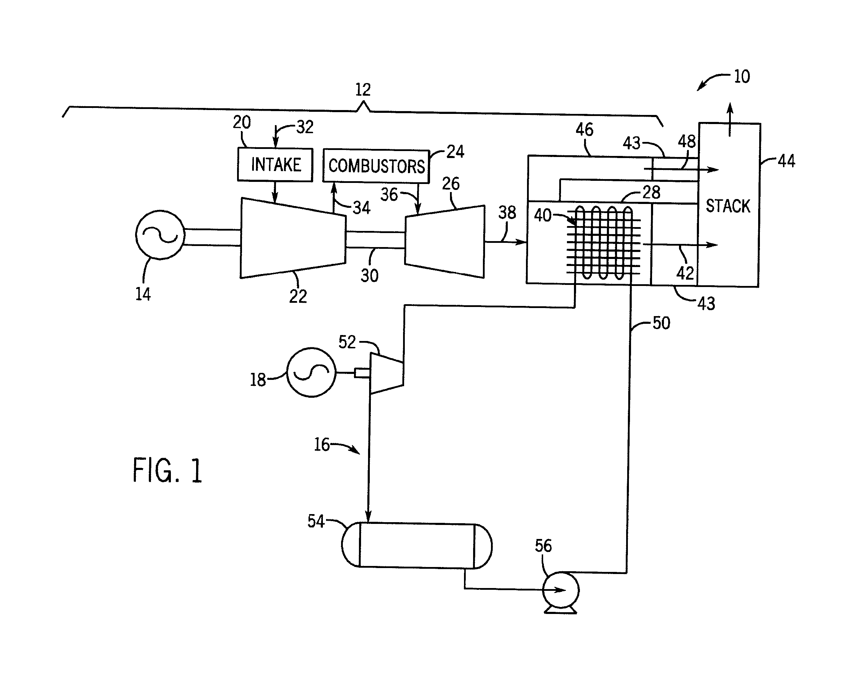

FIG. 1 depicts an embodiment of a power generation system 10 that may employ a heat recovery boiler purging system. The power generation system 10 includes an engine, such as a gas turbine engine 12, that generates waste heat that may be recovered by a waste heat recovery system 16. As may be appreciated, the gas turbine engine 12 is provided as one example of an engine that produces waste heat, and is not intended to be limiting. In other embodiments, the waste heat recovery system described herein may be employed to recover heat from other types of engines that generate waste heat. For example, in other embodiments, the waste heat recovery system 16 may recover heat from a reciprocating engine, or other suitable engine that produces waste heat.

As shown in FIG. 1, the gas turbine engine 12 combusts fuel (e.g. a liquid or gas fuel) to drive a first load 14. The power generation system 10 also includes a waste heat recovery system 16 that recovers low-grade heat from the gas turbine to drive a second load 18. According to certain embodiments, the first and second loads 14 and 18 may be electrical generators for generating electrical power. However, in other embodiments, the types of loads driven by the power generation system 10 may vary.

The gas turbine engine 12 includes an air intake section 20, a compressor 22, a combustor section 24, a turbine 26, and an exhaust section 28. The turbine 26 is coupled to the compressor 22 via a shaft 30. Air 32 may enter the gas turbine engine 12 through the intake section 20 and flow into the compressor 22 where the air may be compressed to provide compressed air 34 to the combustor section 24. Within the combustor section 24, the compressed air 34 may mix with fuel in a fuel-to-air ratio that facilitates combustion of the fuel to produce combustion gases 36. According to certain embodiments, the combustor section 24 may include multiple combustors disposed annularly around the shaft 30.

From the combustor section 24, the hot combustion gases 36 may flow through the turbine 26 to drive the compressor 22 and/or the first load 14 via the shaft 30. For example, the combustion gases 36 may apply motive forces to turbine rotor blades within the turbine 26 to rotate the shaft 30. After flowing through the turbine 26, the hot combustion gases may exit the gas turbine engine 12 as exhaust gases 38 that flow through the exhaust section 28 to exit the gas turbine engine 12.

As the exhaust gases 38 flow through the exhaust section 28, the exhaust gases 38 may flow through an heat recovery boiler 40 that may absorb heat from the exhaust gases 38 to produce cooled exhaust gases 42. The heat recovery boiler 40 is located directly in the flow path of the exhaust gases 38 so that the exhaust gases 38 may transfer heat directly to a working fluid flowing through the heat recovery boiler 40. The cooled exhaust gases 42 may then exit the exhaust section 28 and may be directed through ductwork 43 to a stack 44 where the gases may be vented to the atmosphere.

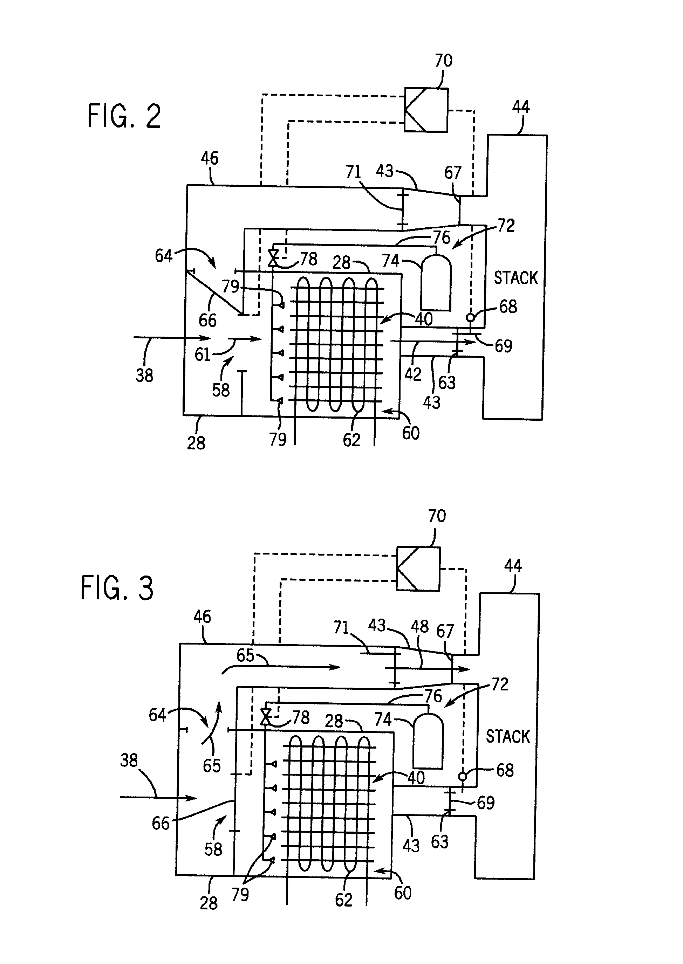

As described further with respect to FIG. 2, the exhaust section 28 also may include a bypass duct 46 that allows the exhaust gases 38 to exit the exhaust section 28 without flowing past the heat recovery boiler 40. The bypass duct 46 may be employed to remove exhaust gases 38 from the exhaust section 28 if the heat recovery boiler 40 develops a leak that may expose combustible organic working fluid from the heat recovery boiler 40 to the exhaust gases 38. When the bypass mode is enabled, the exhaust gases 38 may be directed through the bypass duct 46 to exit the exhaust section 28 as bypass exhaust gases 48 that have bypassed the heat recovery boiler 40. The bypass exhaust gases 48 may be directed to the stack 44 where the gases may be vented to the atmosphere. As shown, both the bypass exhaust gases 48 and the cooled exhaust gases 42 may be directed to the same stack 44. However, in other embodiments, the bypass exhaust gases 48 and the cooled exhaust gases 42 may be directed to separate stacks.

As the exhaust gases 38 flow through the heat recovery boiler 40 disposed within the exhaust gas path of the exhaust section 28, the hot exhaust gases 38 may transfer heat to a working fluid flowing through the heat recovery boiler 40 within a working fluid loop 50. According to certain embodiments, the heat recovery boiler 40 may be a fin and tube heat exchanger that allows the working fluid to be circulated within the working fluid loop 50 directly in the path of the exhaust gases 38. Accordingly, the exhaust gases 38 may transfer heat directly to the working fluid circulating within the waste heat recovery system 16, rather than transferring heat through an intermediate loop, such as an oil loop.

According to certain embodiments, the waste heat recovery system 16 may circulate an organic working fluid within the working fluid loop 50 to recover waste heat from the exhaust gases 38. Any suitable organic working fluid, such as a hydrocarbon fluid or refrigerant, may be employed. The use of an organic working fluid may be particularly well suited to the waste heat recovery loop 50 due to the relatively low phase change enthalpy of the organic working fluid. According to certain embodiments, the organic working fluid may be an organic, high molecular mass, fluid that has a higher vapor pressure and lower critical temperature than water.

As the working fluid flows through the heat recovery boiler 40, the working fluid may absorb heat from the exhaust gases 38 causing all, or a substantial portion of the working fluid to change from a liquid phase to a vapor phase. The heated working fluid may then flow to an expander generator set 52 where the working fluid may be expanded to drive the second load 18. For example, the expander generator set 52 may include an expander that may be coupled to a generator to produce electricity from the expansion of the heated working fluid. From the expander generator set 52, the working fluid may flow to a condenser 54 where the working fluid may be condensed. According to certain embodiments, the condenser 54 may be an air-cooled heat exchanger. However, in other embodiments, any suitable type of condenser may be employed.

The condensed working fluid may then flow through a pump 58 that returns the working fluid to the heat recovery boiler 40 where the process may begin again. In other embodiments, additional equipment, such as valves, temperature and/or pressure sensors or transducers, receivers, and the like, may be included in the waste heat recovery system 16. For example, in certain embodiments, a recuperator or preheater may be included upstream from the heat recovery boiler 40 to preheat the working fluid before it enters the heat recovery boiler 40. Further, the waste heat recovery system 16 may be installed as part of a new power generation system 10 and/or may be retrofit into an existing power generation system 10. For example, in certain embodiments, an existing gas turbine 12 may be retrofitted with a waste heat recovery system 16 that disposes a heat recovery boiler 40 in the exhaust gas section 28.

As shown in FIG. 1, the heat recovery boiler 40 is located within the exhaust section 28 directly in the flow path of the hot exhaust gas 38. The direct transfer of heat from the exhaust gas to the waste heat recovery system 16 may increase the overall efficiency of the waste heat recovery system 16 when compared to a system using an intermediate loop to indirectly transfer heat from the exhaust gas to the waste heat recovery system. Further, the elimination of a secondary loop may reduce capital and/or operational costs. However, due to the potential flammability of the organic working fluid, it may be desirable to remove exhaust gases 38 from the exhaust section 28 during standstill of the system and/or in the event of a leak in the heat recovery boiler 40 that may allow the working fluid to leak from the heat recovery boiler into the exhaust section 28. Accordingly, FIGS. 2 and 3 depict an inert gas purging system that may be employed to remove and/or to dilute exhaust gases 38 from the exhaust section 28.

As shown in FIG. 2, the exhaust gases 38 may flow through an opening 58 to enter an interior volume 60 of the exhaust section 28, as generally shown by arrows 61. The heat recovery boiler 40 may be located within the interior volume 60 in the flow path of the exhaust gases 38. The heat recovery boiler 40 includes finned tubes 62 in which the working fluid is circulated. According to certain embodiments, the finned tubes 62 may be disposed generally perpendicular to the flow of the exhaust gas 38 through the interior volume 60 to promote good heat transfer from the exhaust gases 38 to the working fluid circulating within the finned tubes 62.

After the exhaust gases 38 flow through the heat recovery boiler 40, the cooled exhaust gases 42 may exit the exhaust section 28 and enter the stack 44 through an inlet 63. As discussed above, because the working fluid circulating within the finned tubes 62 may be potentially flammable, it may be desirable to remove the exhaust gases 38 from the interior volume 60 in the event of a leak in the finned tubes 62. Accordingly, in the event of a leak, rather than directing the exhaust gases 38 through the opening 58 to the interior volume 60, the exhaust gases 38 may be directed through an opening 64 to flow through the bypass duct 46, as shown generally by arrows 65 in FIG. 3.

To redirect the flow of the exhaust gases 38 through the bypass duct 46, a system of one or more valves 66 may be employed, which are switchable between a waste heat recovery position as shown in FIG. 2 and a bypass position as shown in FIG. 3. The valves 66 may include any type of flow directing, switching, and/or throttling devices that may be switched between positions to permit flow in one position and to restrict flow in another position. According to certain embodiments, the valves 66 may include baffles or dampers; however, in other embodiments, any suitable type of valves may be employed.

In the waste heat recovery position, the valve 66 may be positioned to direct the exhaust gases 38 through the interior volume 60, as shown in FIG. 2. In the bypass position, the valve 66 may be positioned to direct the exhaust gases 38 through the bypass duct 46, as shown in FIG. 3. Although the valve 66 is shown in FIGS. 2 and 3 as a single baffle, in other embodiments, a system of two or more baffles and/or dampers may be employed to switch the flow of the exhaust gases between the interior volume 60 and the bypass duct 46.

In the waste heat recovery mode shown in FIG. 2, the valve 66 is positioned over the opening 64 to allow the exhaust gases 38 to flow through the opening 58 into the interior volume 60 where the exhaust gases 38 may flow through the heat recovery boiler 40. A flap 69 may be opened within inlet 63 to allow exhaust gases to flow from the interior volume 60 into the stack 44 through the inlet 63. Further, a flap 71 may be closed within the bypass duct 46 to impede the flow of exhaust gases into the bypass duct 46 from the stack 44. The flaps 69 and 71 may be positioned within the ductwork 43, within the stack inlets 63 and 67, or within the bypass duct 46 and the exhaust section 28. Further, in certain embodiments, the flaps 69 and 71 may be omitted.

When the bypass mode is enabled as shown in FIG. 3, the valve 66 may be positioned over opening 58 to allow the exhaust gases 38 to flow through the opening 64 into the bypass duct 46. Accordingly, in the bypass mode, the exhaust gases 38 may bypass the heat recovery boiler 40 by flowing through the bypass duct 48 and into the stack 44 through an inlet 67. In the bypass mode, the flap 71 may be opened to allow the exhaust gases to flow from the bypass duct 46 to the stack 44 through inlet 67. Further, the flap 69 may be closed to impede the flow of exhaust gases from the stack 44 into the interior volume 60 through the inlet 63.

The bypass duct 46 may be employed when a leak is detected in the finned tubes 62 of the heat recovery boiler 40. Accordingly, one or more sensors 68 may be employed to detect a leak in the finned tubes 62. For example, in embodiments where the working fluid is a hydrocarbon fluid, the sensor 68 may measure the level of hydrocarbons in the exhaust gas exiting the interior volume 60. An increased level of hydrocarbons may indicate a leak within the finned tubes 62. In another example, the sensor 68 may be designed to detect presence of a flame in or around the heat recovery boiler 40, such as by measuring ultraviolet light. The presence of a flame may indicate a leak within the finned tubes 62. In yet another example, multiple sensors 68, such as multiple hydrocarbon sensors, multiple flame detection sensors, or combinations thereof, may be employed. Further, in other embodiments, the sensor 68 may be designed to measure other parameters indicative of the composition of the exhaust gases 38. According to certain embodiments, the sensor 68 may be located in the inlet 63 to the stack 44. However, in other embodiments, the sensor 68 may be positioned within the interior volume 60.

The sensor 68 may be communicatively coupled to a controller 70 that may be used to change the position of the valve 66. For example, the controller 70 may receive an input, such as a hydrocarbon level, from the sensor 68 that indicates that a leak is present in the finned tubes 62. In response to receiving the input, the controller 70 may send a control signal to the valve 66 to move the valve to close opening 58, as shown in FIG. 3, thereby directing the exhaust gases 38 through the opening 64 and into the bypass duct 46. According to certain embodiments, the controller 70 may include an analog to digital (A/D) converter, a microprocessor, a non-volatile memory, and an interface board, among components. However, in other embodiments, rather than being electronically controlled by controller 70, the valve 66 may be mechanically and/or manually controlled. For example, in certain embodiments, the controller 70 may produce an output, such as an alarm, that indicates that the valve 66 should be moved, for example by an operator, to close the opening 58.

The controller 70 also may govern operation of an inert gas injection system 72 that may be used to purge residual exhaust gases 38 from the interior volume 60 after the valve 66 has been moved to the bypass position. The inert gas injection system 72 may include an inert gas supply 74, such as one or more high pressure gas cylinders, which supplies inert gases for the inert gas injection system 72. As used herein, the term "inert gases" shall mean any gas or mixture of gases suitable to suppress combustion, prevent explosion, or extinguish a flame, primarily by dilution and/or displacement of oxygen in the exhaust gas. According to certain embodiments, the inert gases may include nitrogen and/or carbon dioxide.

Piping 76 may be used to direct the inert gases from the inert gas supply 74 into the interior volume 60. A valve 78 may be included within the piping 76 to regulate the flow of the inert gases from the tank 74 into the interior volume 60. For example, the valve 78 may be closed when the system is operating in a waste heat recovery mode to prevent the inert gases from entering the interior volume 60 and may be opened to allow the inert gases to enter the interior volume 60 when the system is operating in the bypass mode. Further, in certain embodiments, the valve 78 may be employed to increase and decrease the flow rate of the inert gases into the interior volume 60. Although only one valve 78 is shown in FIGS. 2 and 3, in other embodiments, a system of multiple valves 78 may be included within the piping 76.

The controller 70 may govern the operation of the inert gas injection system 72 through the valve 78. According to certain embodiments, the controller 70 may open the valve 78 in response to detecting a leak to allow the inert gases to enter the interior volume 60. The inert gases may enter the interior volume through one or more nozzles 79 that may inject the inert gases into the interior volume 60 from the piping 76. According to certain embodiments, the nozzles 79 may allow the inert gases to be injected into the interior volume 60 at relatively high flow rates. Further, the nozzles 79 may be located along the top, bottom, and/or sides, as well as around the exhaust gas inlet area, of the interior volume 60.

As the inert gases enter the interior volume 60, the inert gases may displace residual exhaust gases 38 within the interior volume 60 causing the residual exhaust gases to exit the interior volume 60 and enter the stack 44 through the inlet 63. Accordingly, when bypass mode is enabled, the flap 69 may remain open for a certain period of time to allow the residual exhaust gases to exit the interior volume 60 through the inlet 63. After the residual exhaust gases have exited the interior volume 60, the flap 69 may be closed, as shown in FIG. 3, to inhibit flow of exhaust gases from the stack 44 into the interior volume 60 through the inlet 63. The inert gases also may cool the finned tubes 62 and the interior volume 60, thereby lowering the pressure and temperature in within the interior volume 60. Further, the inert gases may dilute oxygen and hydrocarbon vapors within the interior volume 60, thereby extinguishing any flames that are present within the interior volume 60 and/or inhibiting flames and/or explosion within the exhaust section 28.

After valve 78 has been opened to allow the inert gases to enter the interior volume 60, the controller 70 may stop operation of the pump 58 that circulates the working fluid through the heat recovery boiler 40. When the pump 58 is stopped, the working fluid may evaporate from the heat recovery boiler 40 and collect within the working fluid loop 50. Accordingly, additional working fluid may be inhibited from leaking into the interior volume 60 through the heat recovery boiler 40.

FIG. 3 depicts the exhaust section 28 when the system is in the bypass mode to direct the exhaust gases 38 through the bypass duct 46. As shown in FIG. 3, the valve 66 is positioned over the opening 58 to close the opening 58 and allow the exhaust gases 38 to flow through the opening 64 the bypass duct 46. Accordingly, incoming exhaust gases 38 will be directed to the bypass duct 46 rather than to the interior volume 60 that houses the heat recovery boiler 40. As shown in FIGS. 2 and 3, a single valve 66 may be moved to close off opening 58 and allow flow through the opening 64.

However, in other embodiments, a system of multiple valves 66, such as multiple baffles or dampers, among others, may be employed to switch the system between a waste heat recovery mode where the exhaust gases enter the interior volume 60 and a bypass mode where the exhaust gases enter the bypass duct 46.

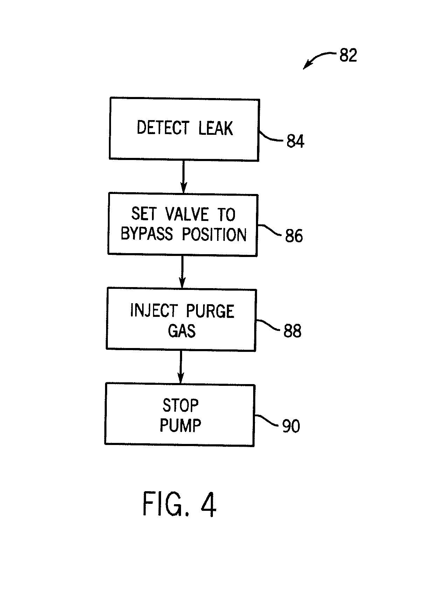

FIG. 4 is a flowchart depicting a method 82 that may be used to purge the interior volume 60 of exhaust gases 38. The method 82 may begin by detecting (block 84) a leak in the heat recovery boiler 40. For example, as shown in FIG. 2, a sensor 68 may detect increased levels of hydrocarbons and/or the presence of a flame. The sensor 68 may provide a signal indicating the level of hydrocarbons to the controller 70 (FIG. 2). The controller 70 may then compare the level to a predetermined threshold or rate of change to determine if a leak is present. In other embodiments, the sensor 68 may determine whether a leak is present and may provide a control input indicating a leak to the controller 70.

In response to detecting a leak, the controller 70 may set (block 86) the valve to the bypass position. For example, as shown in FIG. 3, the controller 70 may switch the valve to close off opening 58 and direct the exhaust gases 38 into the bypass duct 46 through the opening 64. In another embodiment, two or more baffles may be used, and in these embodiments, the controller 70 may move one baffle to close the opening 58 and may move another baffle to open the opening 64.

After setting the valve 66 to the bypass position, the controller 70 then may inject (block 88) purge gas into the interior volume 60. For example, the controller 70 may activate the inert gas purging system by opening valve 78 to allow the inert gases to flow into the interior volume 60 through the nozzles 79. The inert gases may then purge residual exhaust gases 38 from the interior volume 60 by displacing the residual exhaust gases 38 from the interior volume 60 to the stack 44 through the inlet 63. As noted above with respect to FIG. 2, the inert gases also may reduce the temperature within the interior volume 60, thereby reducing the occurrence of fire and/or extinguishing any flames that may be present within the interior volume 60. The controller 70 also may stop (block 90) operation of the pump 56 (FIG. 1) that circulates the working fluid through the heat recovery boiler 62. Stopping the pump may inhibit additional working fluid from entering the interior volume 60 through the heat recovery boiler 40.

After the interior volume 60 has been purged of the exhaust gases 38, repairs may be conducted to repair any leaks within the heat recovery boiler 40. For example, the finned tubes 62 may be repaired or replaced. After the repairs have been completed, the valve 66 may be reset to the waste heat recovery position, as shown in FIG. 2, which allows the incoming exhaust gases 38 to again enter the interior volume 60.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. A system comprising:
a valve system (66) switchable between a waste heat recovery position configured to direct incoming exhaust gas (38) through an interior volume (60) of an exhaust section (28) of an engine (12) and a bypass position configured to direct the incoming exhaust gas (38) through a bypass duct (46) to bypass a heat recovery boiler (40) disposed within the interior volume (60);
**characterized in that** it further comprises
an inert gas purging system (72) configured to inject an inert gas into the interior volume (60) to displace residual exhaust gas (38) from the interior volume (60).

2. The system of claim 1, wherein the inert gas purging system (72) comprises an inert gas valve system (78) configured to selectively enable and disable a flow of the inert gas from an inert gas supply (74) to the interior volume (60).

3. The system of claim 1 or claim 2, wherein the inert gas purging system (72) comprises flow nozzles (79) configured to be mounted within the interior volume (60) to inject the inert gas into the interior volume (60).

4. The system of any preceding claim, comprising a controller (70) configured to move the valve system (66) to the bypass position and to activate the inert gas purging system (72) in response to detection of a leak in the heat recovery boiler (40).

5. The system of any preceding claim, comprising a sensor (68) configured to detect an amount of an organic working fluid within the interior volume (60) to detect the leak in the heat recovery boiler (40).

6. The system of any preceding claim, wherein the heat recovery boiler (40) is configured to circulate an organic working fluid from a waste heat recovery system (16).

7. A method (82) comprising:
detecting (84) a leak of an organic working fluid from a heat recovery boiler (40) into an interior volume (60) of an exhaust section (28) of an engine (12);
setting (86) a valve (60) to a bypass position to direct incoming exhaust gas (38) to bypass the interior volume (60) of the exhaust section (28) in response to detecting the leak; and
injecting (88) an inert gas into the interior volume (60) to displace residual exhaust gas (38) from the interior volume (60) in response to detecting the leak.

8. The method of claim 7, wherein detecting (84) a leak comprises detecting an increase in a level of hydrocarbons exiting the interior volume (60).

9. The method of claim 7 or claim 8, wherein setting (86) a valve (60) to a bypass position comprises moving the valve (60) to open an inlet (64) to a bypass duct (46) and to close an inlet (58) to the interior volume (60).

10. The method of claim 7, comprising stopping (90) a pump that circulates the organic working fluid through the heat recovery boiler (40) in response to detecting the leak.

11. The method of any of claims 7 to 10, wherein detecting a leak comprises receiving data indicative of the leak from a sensor disposed within an exhaust gas stack or within the interior volume.

12. The method of any of claims 7 to 11, wherein setting a valve to a bypass position comprises moving a system of valves to open an inlet to a bypass duct and to close an inlet to the interior volume.

## Patentansprüche

1. System, das Folgendes aufweist:
ein Ventilsystem (66), schaltbar zwischen einer Abwärmenutzungsposition, die zum Leiten von eingehendem Abgas (38) durch ein Innenraumvolumen (60) eines Auslassbereichs (28) eines Triebwerks (12) konfiguriert ist, und einer Bypass-Stellung, die zum Leiten des eingehenden Abgases (38) durch eine Bypass-Leitung (46) zum Vorbeiführen an einem innerhalb des Innenraumvolumens (60) angeordneten Abhitzekessel (40) konfiguriert ist; **dadurch gekennzeichnet, dass** es weiter Folgendes aufweist:
ein Inertgasreinigungssystem (72), konfiguriert zum Einleiten eines inerten Gases in das Innenraumvolumen (60), um restliches Abgas (38) aus dem Innenraumvolumen (60) zu verdrängen.

2. System nach Anspruch 1, wobei das Inertgasreinigungssystem (72) ein Inertgas-Ventilsystem (78) aufweist, das konfiguriert ist, um einen Strom des Inertgases von einer Inertgaszufuhr (74) zum Innenraumvolumen (60) selektiv zu aktivieren bzw. zu deaktivieren.

3. System nach Anspruch 1 oder 2, wobei das Inertgasreinigungssystem (72) Durchflussdüsen (79) aufweist, die zum Anbringen innerhalb des Innenraumvolumens (60) konfiguriert sind, um das Inertgas in das Innenraumvolumen (60) einzuspeisen.

4. System nach einem der vorstehenden Ansprüche, aufweisend eine Steuerung (70), die konfiguriert ist, um das Ventilsystem (66) in die Bypass-Stellung zu bewegen und das Inertgasreinigungssystem (72) in Abhängigkeit vom Detektieren eines Lecks im Abhitzekessel (40) zu aktivieren.

5. System nach einem der vorstehenden Ansprüche, aufweisend einen Sensor (68), der konfiguriert ist, um eine Menge eines organischen Arbeitsmediums innerhalb des Innenraumvolumens (60) zu detektieren, um das Leck im Abhitzekessel (40) zu detektieren.

6. System nach einem der vorstehenden Ansprüche, wobei der Abhitzekessel (40) konfiguriert ist, um ein organisches Arbeitsmedium aus einem Abwärmenutzungssystem (16) zirkulieren zu lassen.

7. Verfahren (82), das Folgendes aufweist:
Detektieren (84) eines Les eines organischen Arbeitsmediums aus einem Abhitzekessel (40) in ein Innenraumvolumen (60) eines Auslassbereichs (28) eines Triebwerks (12);
Einstellen (86) eines Ventils (60) auf eine Bypass-Stellung, um eingehendes Abgas (38) in Abhängigkeit vom Detektieren des Lecks zum Vorbeiführen am Innenraumvolumen (60) des Auslassbereichs (28) zu leiten; und
Einspeisen (88) eines Inertgases in das Innenraumvolumen (60), um in Abhängigkeit vom Detektieren des Lecks restliches Abgas (38) aus dem Innenraumvolumen (60) zu verdrängen.

8. Verfahren nach Anspruch 7, wobei das Detektieren (84) eines Lecks das Detektieren eines Ansteigens eines Pegels von aus dem Innenraumvolumen (60) austretenden Kohlenwasserstoffen aufweist.

9. Verfahren nach Anspruch 7 oder 8, wobei das Einstellen (86) eines Ventils (60) auf eine Bypass-Stellung das Bewegen des Ventils (60) zum Öffnen eines Einlasses (64) zu einer Bypass-Leitung (46) und zum Schließen eines Einlasses (58) zum Innenraumvolumen (60) aufweist.

10. Verfahren nach Anspruch 7, aufweisend das Anhalten (90) einer Pumpe, die in Abhängigkeit vom Detektieren des Lecks das organische Arbeitsmedium durch den Abhitzekessel (40) zirkulieren lässt.

11. Verfahren nach einem der Ansprüche 7 bis 10, wobei das Detektieren eines Lecks das Empfangen von den das Leck angebenden Daten von einem Sensor aufweist, der innerhalb eines Abgaskamins oder innerhalb des Innenraumvolumens angeordnet ist.

12. Verfahren nach einem der Ansprüche 7 bis 11, wobei das Einstellen eines Ventils auf eine Bypass-Stellung das Bewegen eines Ventilsystems zum Öffnen eines Einlasses zu einer Bypass-Leitung und zum Schließen eines Einlasses zum Innenraumvolumen aufweist.

## Revendications

1. Système comprenant :
un système de soupapes (66) qui peut être commuté entre une position de récupération de chaleur perdue configurée pour diriger des gaz d'échappement entrants (38) à travers un volume intérieur (60) d'une section d'échappement (28) d'un moteur (12) et une position de dérivation configurée pour diriger les gaz d'échappement entrants (38) à travers un conduit de dérivation (46) pour dériver une chaudière de récupération de chaleur (40) disposée dans le volume intérieur (60) ;
**caractérisé en ce qu'**il comprend en outre :
un système de purge de gaz inerte (72) configuré pour injecter un gaz inerte dans le volume intérieur (60) afin de déplacer les gaz d'échappement résiduels du volume intérieur (60).

2. Système selon la revendication 1, dans lequel le système de purge de gaz inerte (72) comprend un système de soupapes de gaz inerte (78) configuré pour permettre et interdire de manière sélectivement un écoulement du gaz inerte d'une alimentation en gaz inerte (74) dans le volume intérieur (60).

3. Système selon la revendication 1 ou la revendication 2, dans lequel le système de purge de gaz inerte (72) comprend des buses d'écoulement (79) configurées pour être montées dans le volume intérieur (60) afin d'injecter le gaz inerte dans le volume intérieur (60).

4. Système selon l'une quelconque des revendications précédentes, comprenant un dispositif de commande (70) configuré pour déplacer le système de soupapes (66) en position de dérivation et pour activer le système de purge de gaz inerte (72) en réponse à la détection d'une fuite dans la chaudière de récupération de chaleur (40).

5. Système selon l'une quelconque des revendications précédentes, comprenant un capteur (68) configuré pour détecter une quantité d'un fluide de travail organique dans le volume intérieur (60) afin de détecter la fuite dans la chaudière de récupération de chaleur (40).

6. Système selon l'une quelconque des revendications précédentes, dans lequel la chaudière de récupération de chaleur (40) est configurée pour faire circuler un fluide de travail organique provenant d'un système de récupération de chaleur perdue (16).

7. Procédé (82) comprenant les étapes consistant à :
détecter (84) une fuite d'un fluide de travail organique provenant d'une chaudière de récupération de chaleur (40) dans un volume intérieur (60) d'une section d'échappement (28) d'un moteur (12) ;
régler (86) une soupape (60) en position de dérivation pour diriger des gaz d'échappement entrants (38) afin de contourner le volume intérieur (60) de la section d'échappement (28) en réponse à la détection de la fuite ; et
injecter (88) un gaz inerte dans le volume intérieur (60) pour déplacer les gaz d'échappement résiduels (38) du volume intérieur (60) en réponse à la détection de la fuite.

8. Procédé selon la revendication 7, dans lequel la détection (84) d'une fuite comprend la détection d'une augmentation du niveau d'hydrocarbures quittant le volume intérieur (60).

9. Procédé selon la revendication 7 ou la revendication 8, dans lequel le réglage (86) d'une soupape (60) en position de dérivation comprend le déplacement de la soupape (60) pour ouvrir une entrée (64) vers un conduit de dérivation (46) et fermer une entrée (58) vers le volume intérieur (60).

10. Procédé selon la revendication 7, comprenant l'arrêt (90) d'une pompe qui fait circuler le fluide de travail organique à travers la chaudière de récupération de chaleur (40) en réponse à la détection de la fuite.

11. Procédé selon lune quelconque des revendications 7 à 10, dans lequel la détection d'une fuite comprend la réception de données indicatives de la fuite d'un capteur disposé au sein de la cuve de gaz d'échappement ou dans le volume intérieur.

12. Procédé selon l'une quelconque des revendications 7 à 11, dans lequel le réglage d'une soupape en position de dérivation comprend le déplacement d'un système de soupapes pour ouvrir une entrée vers un conduit de dérivation et fermer une entrée vers le volume intérieur.
